# EUROPÄISCHE PATENTSCHRIFT

(11) **EP 3 016 246 B1**
(45) Veröffentlichungstag und Bekanntmachung des Hinweises auf die Patenterteilung: **05.12.2018**
(21) Anmeldenummer: 15183130.2
(22) Anmeldetag: 31.08.2015
(51) Int. Cl.: H02K 1/14, H02K 1/18

(54) **VORRICHTUNG ZUR BEFESTIGUNG EINES STATORS IN EINEM GEHÄUSE**
DEVICE FOR SECURING A STATOR IN A HOUSING
DISPOSITIF DE FIXATION D'UN STATOR DANS UN BOITIER

(30) Priorität: 28.10.2014 DE 102014221872
(43) Veröffentlichungstag der Anmeldung: 04.05.2016
(73) Patentinhaber: ROBERT BOSCH GMBH, 70442 Stuttgart (DE); EM-motive GmbH, 31139 Hildesheim (DE)
(72) Erfinder: Schade, Till, 70469 Stuttgart (DE); Kersten, Eike-Christian, 30625 Hannover (DE); Topf, Andreas, 99869 Ballstaedt (DE); Zeadan, Jeihad, 4728 Kelmis (BE); Overmeier, Sarah, 96049 Bamberg (DE); Hein, Tobias, 31139 Hildesheim (DE)

(56) Entgegenhaltungen:
- WO-A2-2014/032983
- US-A- 3 260 875

## Beschreibung

### Stand der Technik

Die Erfindung geht aus von einer Vorrichtung zur Befestigung eines Stators in einem Gehäuse.

Es ist schon eine Vorrichtung zur Befestigung eines Stators in einem Gehäuse aus der DE1973001 A1 bekannt, mit einem Gehäuse und einem in dem Gehäuse befestigten Stator, der am Umfang eine Ausnehmung aufweist, in der ein Spannstift zur Verbindung des Gehäuses mit dem Stator vorgesehen ist. In dem Gehäuse ist eine weitere Ausnehmung vorgesehen, wobei der Spannstift abschnittsweise in der Ausnehmung des Stators und abschnittsweise in der Ausnehmung des Gehäuses angeordnet ist, um einen Formschluss zu bilden.

Diese Art der Befestigung hat den Nachteil, dass das Gehäuse spanend nachbearbeitet werden muss, um die weitere Ausnehmung im Gehäuse herzustellen. Durch die spanende Bearbeitung können Späne in die elektrische Maschine gelangen, die zu einer Beschädigung der elektrische Maschine führen können. Außerdem ist eine spanende Nachbearbeitung in der Fertigung zeit- und kostenintensiv.

Aus der WO 2014/032983 A2 ist ein Stator bekannt, der am Umfang zumindest eine Ausnehmung aufweist, in der ein Einlegeteil zur Verbindung des Stators mit einem Mantelblech vorgesehen ist, wobei das Einlegeteil mit dem Mantelblech stoffschlüssig verbunden sein kann.

### Vorteile der Erfindung

Die erfindungsgemäße Vorrichtung mit den kennzeichnenden Merkmalen des Anspruchs 1 hat demgegenüber den Vorteil, dass eine spanende Bearbeitung des Gehäuses der elektrischen Maschine entfällt und die Herstellungskosten verringert werden, indem das Einlegeteil mit dem Gehäuse stoffschlüssig verbunden ist.

Auf diese Weise wird ein Formschluss zum Stator und ein Stoffschluss zum Gehäuse erreicht. Außerdem wird Späne im Gehäuse der elektrischen Maschine vermieden. Darüber hinaus kann die Wandstärke des Gehäuses verringert werden.

Erfindungsgemäß ist es vorteilhaft, wenn das Einlegeteil L-förmig oder T-förmig ausgebildet ist. Die L- oder T-förmige Ausführung hat den Vorteil, dass zusätzlich eine axiale Fixierung des Stators im Gehäuse der elektrischen Maschine realisiert werden kann.

Außerdem ist es erfindungsgemäß vorteilhaft, wenn das L- oder T-förmige Einlegeteil mit einem Längsabschnitt in die Ausnehmung des Stators hineinragt und mit einem zum Längsabschnitt quer verlaufenden Querabschnitt über die Ausnehmung hinaus vorsteht und an einer Stirnseite des Stators anliegt. Auf diese Weise wird die axiale Fixierung des Stators im Gehäuse der elektrischen Maschine erreicht.

Durch die in den Unteransprüchen aufgeführten Maßnahmen sind vorteilhafte Weiterbildungen und Verbesserungen der im Anspruch 1 angegebenen Vorrichtung möglich.

Besonders vorteilhaft ist, wenn das Einlegeteil mit dem Gehäuse mittels Schweißen, insbesondere Laserschweißen, verbunden ist.

Darüber hinaus vorteilhaft ist, wenn das Einlegeteil einen viereckförmigen, insbesondere rechteckförmigen Querschnitt aufweist, da auf diese Weise ein guter Formschluss erreichbar ist, ohne die Wandstärke des Gehäuses erhöhen zu müssen.

Weiterhin vorteilhaft ist, wenn die Ausnehmung in axialer Richtung bezüglich einer Achse des Stators verläuft, da dies besonders einfach herstellbar ist. Die Ausnehmung kann aber auch in eine Richtung verlaufen, die eine axiale Komponente und eine Komponente in Umfangsrichtung aufweist.

Sehr vorteilhaft ist es, wenn die Ausnehmung und/oder das Einlegeteil über einen Teil der Länge oder über die gesamte Länge des Stators verlaufen. Je größer die Länge der Ausnehmung und des Einlegeteils ist, desto größer ist das über den Formschluss übertragbare Drehmoment.

Auch vorteilhaft ist, wenn die Höhe des Einlegeteils kleiner ist als die Tiefe der Ausnehmung des Stators oder gleich hoch ist wie die Tiefe der Ausnehmung des Stators, da das Einlegeteil auf diese Weise nicht aus der Ausnehmung vorsteht und die Mantelfläche des Stators kreisförmig bleibt.

Gemäß einem Ausführungsbeispiel ist das Gehäuse der elektrischen Maschine aus Aluminium und das Einlegeteil aus Stahl hergestellt. Alternativ kann das Gehäuse aus Stahl und das Einlegeteil aus Stahl hergestellt sein. Der Stator ist beispielsweise aus einem Stapel von Blechlamellen aus Elektroblech hergestellt.

Desweiteren vorteilhaft ist, wenn der Stator in Umfangsrichtung gesehen aus mehreren Statorsegmenten gebildet ist, da die einzelnen Statorsegmente aus Fertigungsgründen jeweils die Ausnehmung am Außenumfang benötigen. Diese für andere Zwecke benötigten Ausnehmungen können nun zusätzlich die Funktion der Drehmomentübertragung zwischen Gehäuse und Stator übernehmen.

### Zeichnung

Ausführungsbeispiele der Erfindung sind in der Zeichnung vereinfacht dargestellt und in der nachfolgenden Beschreibung näher erläutert.
- Fig.1: zeigt eine dreidimensionale Ansicht der erfindungsgemäßen Vorrichtung,
- Fig.2: eine Schnittansicht der Vorrichtung nach Fig.1,
- Fig.3: eine weitere Schnittansicht der Vorrichtung nach Fig.1 und
- Fig.4: eine Draufsicht auf den Stator nach Fig.1 mit dem erfindungsgemäßen Einlegeteil.

### Beschreibung des Ausführungsbeispiels

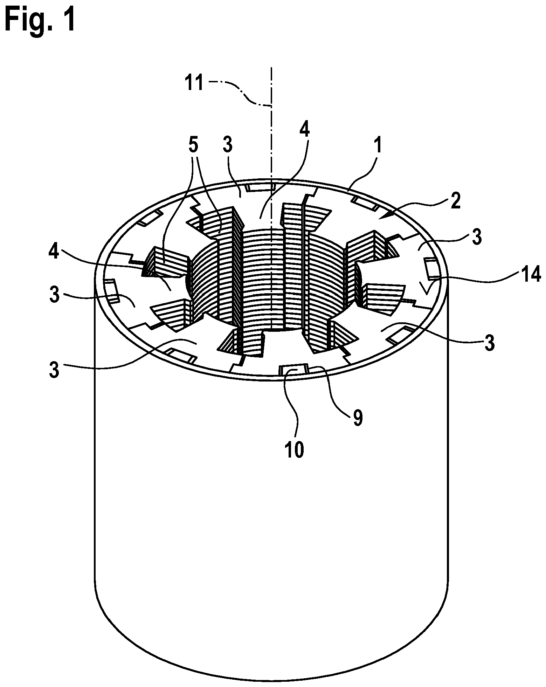

Fig.1 zeigt eine dreidimensionale Ansicht der erfindungsgemäßen Vorrichtung zur Befestigung eines Stators einer elektrischen Maschine in einem Gehäuse einer elektrischen Maschine.

Die Vorrichtung weist ein Gehäuse 1 und ein in dem Gehäuse 1 angeordneten Stator 2 auf. Der Stator 2 ist beispielsweise durch ein Stanzpaket gebildet, das aus einer Vielzahl von gestapelten Lamellen gebildet ist, die aus Elektroblech hergestellt sind. Der Stator 2 kann in Umfangsrichtung des Stators 2 gesehen aus einzelnen Segmenten 3 aufgebaut sein, die jeweils aus einem Stapel von Blechen gebildet sind und zusammengesetzt den ringförmigen Stator ergeben. Der Stator 2 kann aber ausdrücklich auch aus einem Stapel von ringförmigen Lamellen gebildet sein, die über den Umfang nicht geteilt sind. Am Stator 2 sind Statorzähne 4 vorgesehen, zwischen denen Statornuten 5 gebildet sind. In den Statornuten 5 ist eine elektrische Wicklung 6 angeordnet.

Der Stator 2 ist an dem Gehäuse 1 mittels einer Press- oder Übergangspassung befestigt. Zusätzlich weist der Stator 2 an seinem dem Gehäuse 1 zugewandten Umfang zumindest eine Ausnehmung 9 auf, in der jeweils ein Einlegeteil 10 zur Verbindung des Gehäuses 1 mit dem Stator 2 vorgesehen sein kann. Gemäß dem Ausführungsbeispiel weist jedes Segment 3 des Stators 2 aus Fertigungsgründen eine Ausnehmung 9 an seinem Umfang auf.

Das Gehäuse 1 besteht beispielsweise aus Aluminium und das Einlegeteil 10 aus Stahl. Alternativ kann das Gehäuse 1 auch aus Stahl und das Einlegeteil 10 ebenfalls aus Stahl hergestellt sein. Die zumindest eine Ausnehmung 9 am Stator 2 verläuft beispielsweise geradlinig in axialer Richtung bezüglich einer Achse 11 des Stators 2 und ist nutförmig ausgeführt.

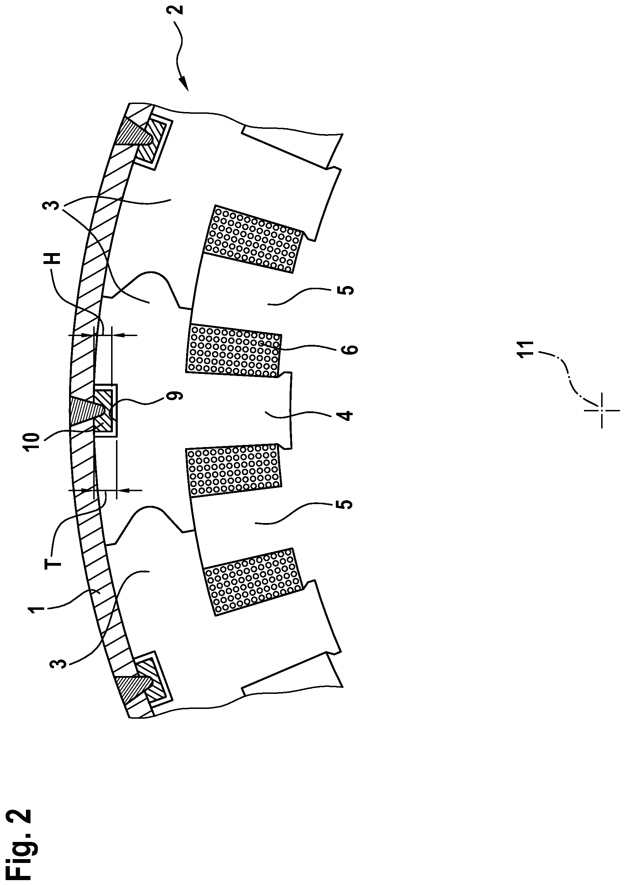

Fig.2 zeigt eine Schnittansicht der Vorrichtung nach Fig.1.

Erfindungsgemäß ist das in der Ausnehmung 9 angeordnete Einlegeteil 10 mit dem Gehäuse 1 der elektrischen Maschine stoffschlüssig verbunden. Nach dem Ausführungsbeispiel wird das Einlegeteil 10 mit dem Gehäuse 1 mittels Schweißen, insbesondere Laserschweißen, verbunden. Auf diese Weise ist das Einlegeteil 10 über einen Formschluss mit dem Stator 2 und über einen Stoffschluss mit dem Gehäuse 1 verbunden. Da weder der Stator 2 noch das Gehäuse 1 spanend bearbeitet werden müssen, wird Späne im Gehäuse 1 der elektrischen Maschine vermieden.

Über den Umfang gesehen kann das Gehäuse 1 über ein oder mehrere Einlegeteile 10 mit dem Stator 2 mechanisch verbunden sein, die jeweils in einer der Ausnehmungen 9 angeordnet sind.

Das Einlegeteil 10 weist jeweils einen viereckförmigen, insbesondere rechteckförmigen Querschnitt auf und ist beispielsweise passfederförmig, L-förmig oder T-förmig ausgebildet.

Das Gehäuse 1 kann von einem nicht dargestellten Kühlmantel umgeben sein, wobei ein Kühlmedium zwischen der Wandung des Gehäuses 1 und dem Kühlmantel entlang geführt wird. Da die Wandung des Gehäuses 1 vollständig geschlossen, also beispielsweise nicht von Bohrungen durchbrochen ist, kann keine Undichtigkeit in der Wandung des Gehäuses 1 auftreten.

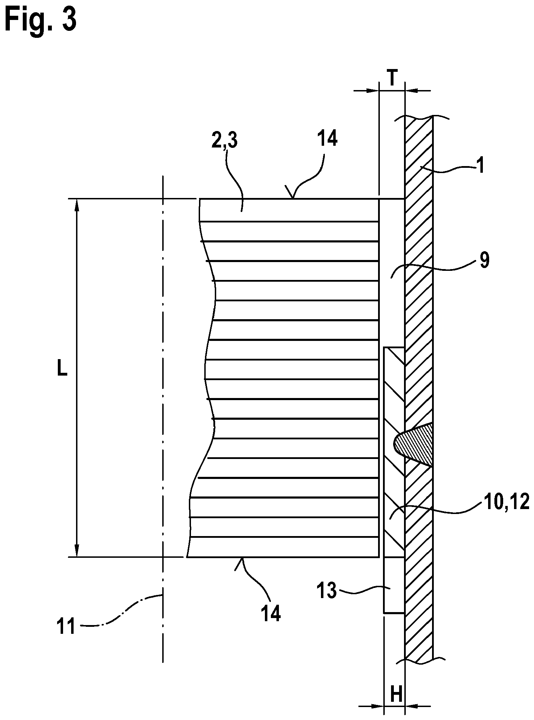

Fig.3 zeigt eine weitere Schnittansicht der Vorrichtung nach Fig.1.

Die zumindest eine Ausnehmung 9 und/oder das Einlegeteil 10 können über einen Teil der Länge L oder über die gesamte Länge L des Stators 2 verlaufen, beispielsweise unter einem Winkel von 75 bis 90 Grad zu einer Stirnseite des Stators 2. Je größer die Länge der Ausnehmung 9 und des in der Ausnehmung 9 angeordneten Einlegeteils 10 ist, desto größer ist das über den Formschluss übertragbare Drehmoment. Die Höhe H des Einlegeteils 10 ist kleiner als die Tiefe T der zumindest einen Ausnehmung des Stators oder gleich hoch.

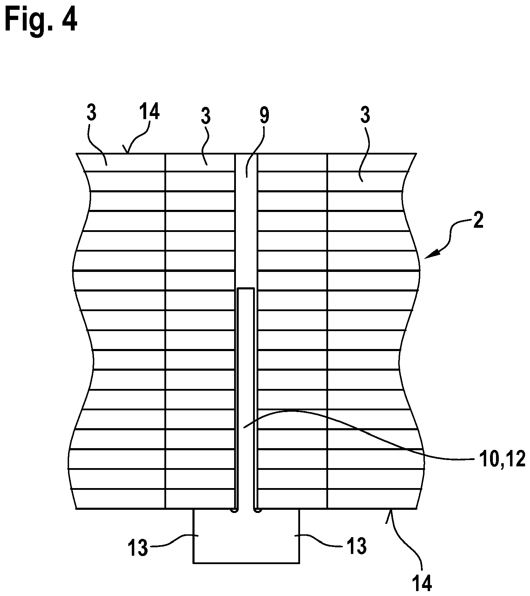

Fig.4 zeigt eine Draufsicht auf den Stator 2 nach Fig.1 mit dem erfindungsgemäßen Einlegeteil 10.

Bei der L- oder T-förmigen Ausführung des Einlegeteils 10 ist ein Längsabschnitt 12 in der zumindest einen Ausnehmung 9 des Stators 2 angeordnet, wobei ein zum Längsabschnitt 12 quer verlaufender Querabschnitt 13 einseitig oder beidseitig über die zumindest eine Ausnehmung 9 hinaus vorsteht und dabei an der Stirnseite 14 des Stators 2 anliegt. Auf diese Weise wird eine axiale Fixierung und/oder Positionierung des Stators 2 im Gehäuse 1 der elektrischen Maschine erreicht.

## Patentansprüche

1. Vorrichtung zur Befestigung eines Stators einer elektrischen Maschine in einem Gehäuse, mit einem Gehäuse (1) und einem in dem Gehäuse (1) befestigten Stator (2), der am Umfang zumindest eine Ausnehmung (9) aufweist, in der ein Einlegeteil (10) zur Verbindung des Gehäuses (1) mit dem Stator (2) vorgesehen ist, wobei das Einlegeteil (10) mit dem Gehäuse (1) stoffschlüssig verbunden ist, **dadurch gekennzeichnet, dass** das Einlegeteil (10) L-förmig oder T-förmig ausgebildet ist und das L- oder T-förmige Einlegeteil (10) mit einem Längsabschnitt (12) in der Ausnehmung (9) des Stators (2) angeordnet ist und mit einem zum Längsabschnitt (12) quer verlaufenden Querabschnitt (13) über die zumindest eine Ausnehmung (9) hinaus vorsteht und an einer Stirnseite (14) des Stators (2) anliegt.

2. Vorrichtung nach Anspruch 1, **dadurch gekennzeichnet, dass** das Einlegeteil (10) mit dem Gehäuse (1) mittels Schweißen, insbesondere Laserschweißen verbunden ist.

3. Vorrichtung nach einem der vorhergehenden Ansprüche, **dadurch gekennzeichnet, dass** das Einlegeteil (10) einen viereckförmigen, insbesondere rechteckförmigen Querschnitt aufweist.

4. Vorrichtung nach einem der vorhergehenden Ansprüche, **dadurch gekennzeichnet, dass** die zumindest eine Ausnehmung (9) in axialer Richtung bezüglich einer Achse (11) des Stators (2) verläuft.

5. Vorrichtung nach einem der vorhergehenden Ansprüche, **dadurch gekennzeichnet, dass** die zumindest eine Ausnehmung (9) und/oder das Einlegeteil (10) über einen Teil der Länge oder über die gesamte Länge des Stators (2) verläuft.

6. Vorrichtung nach einem der vorhergehenden Ansprüche, **dadurch gekennzeichnet, dass** die Höhe (H) des Einlegeteils (10) kleiner ist als die Tiefe (T) der zumindest einen Ausnehmung (9) des Stators (2) oder gleich hoch ist wie die Tiefe (T) der zumindest einen Ausnehmung (9) des Stators (2).

7. Vorrichtung nach einem der vorhergehenden Ansprüche, **dadurch gekennzeichnet, dass** das Gehäuse (1) aus Aluminium und das Einlegeteil (10) aus Stahl oder das Gehäuse (1) aus Stahl und das Einlegeteil (10) aus Stahl hergestellt ist.

8. Vorrichtung nach einem der vorhergehenden Ansprüche, **dadurch gekennzeichnet, dass** der Stator (1) in Umfangsrichtung gesehen aus mehreren Statorsegmenten (3) gebildet ist.

## Claims

1. Apparatus for mounting a stator of an electrical machine in a housing, comprising a housing (1) and a stator (2) which is mounted in the housing (1) and has at least one recess (9) on the periphery, an insert part (10) for connecting the housing (1) to the stator (2) being provided in the said recess, wherein the insert part (10) is connected in a materially-bonded manner to the housing (1), **characterized in that** the insert part (10) is of L-shaped or T-shaped design, and the L-shaped or T-shaped insert part (10) is arranged with a longitudinal section (12) in the recess (9) of the stator (2) and with a transverse section (13), which runs transversely in relation to the longitudinal section (12), protruding beyond the at least one recess (9) and resting against an end side (14) of the stator (2).

2. Apparatus according to Claim 1, **characterized in that** the insert part (10) is connected to the housing (1) by means of welding, in particular laser welding.

3. Apparatus according to either of the preceding claims, **characterized in that** the insert part (10) has a quadrilateral, in particular rectangular, cross section.

4. Apparatus according to one of the preceding claims, **characterized in that** the at least one recess (9) runs in the axial direction with respect to an axis (11) of the stator (2).

5. Apparatus according to one of the preceding claims, **characterized in that** the at least one recess (9) and/or the insert part (10) run/runs over a portion of the length or over the entire length of the stator (2).

6. Apparatus according to one of the preceding claims, **characterized in that** the height (H) of the insert part (10) is smaller than the depth (T) of the at least one recess (9) of the stator (2) or is equal to the depth (T) of the at least one recess (9) of the stator (2).

7. Apparatus according to one of the preceding claims, **characterized in that** the housing (1) is produced from aluminium and the insert part (10) is produced from steel, or the housing (1) is produced from steel and the insert part (10) is produced from steel.

8. Apparatus according to one of the preceding claims, **characterized in that** the stator (1) is formed from a plurality of stator segments (3) as seen in the peripheral direction.

## Revendications

1. Dispositif de fixation d'un stator d'une machine électrique dans un boîtier, comprenant un boîtier (1) et un stator (2) qui est fixé dans le boîtier (1) et présente à sa périphérie au moins un évidement (9) dans lequel est prévu un insert (10) destiné à relier le boîtier (1) au stator (2), dans lequel l'insert (10) est relié au boîtier (1) par complémentarité de matériau, **caractérisé en ce que** l'insert (10) est réalisé en forme de L ou de T et **en ce que** l'insert (10) en forme de L ou de T est disposé avec une section longitudinale (12) dans l'évidement (9) du stator (2) et avec une section transversale (13) s'étendant transversalement à la section longitudinale (12), qui dépasse de l'au moins un évidement (9) et repose sur une face avant (14) du stator (2) .

2. Dispositif selon la revendication 1, **caractérisé en ce que** l'insert (10) est relié au boîtier (1) par soudage, en particulier par soudage au laser.

3. Dispositif selon l'une des revendications précédentes, **caractérisé en ce que** l'insert (10) présente une section transversale quadrangulaire, en particulier rectangulaire.

4. Dispositif selon l'une des revendications précédentes, **caractérisé en ce que** l'au moins un évidement (9) s'étend dans une direction axiale par rapport à un axe (11) du stator (2).

5. Dispositif selon l'une des revendications précédentes, **caractérisé en ce que** l'au moins un évidement (9) et/ou l'insert (10) s'étend sur une partie de la longueur ou sur toute la longueur du stator (2).

6. Dispositif selon l'une des revendications précédentes, **caractérisé en ce que** la hauteur (H) de l'insert (10) est inférieure à la profondeur (T) de l'au moins un évidement (9) du stator (2) ou est égale à la profondeur (T) de l'au moins un évidement (9) du stator (2) .

7. Dispositif selon l'une des revendications précédentes, **caractérisé en ce que** le boîtier (1) est constitué d'aluminium et l'insert (10) d'acier ou **en ce que** le boîtier (1) est constitué d'acier et l'insert (10) d'acier.

8. Dispositif selon l'une des revendications précédentes, **caractérisé en ce que** le stator (1), vu dans la direction périphérique, est formé d'une pluralité de segments de stator (3).
